(19) Europäisches Patentamt
European Patent Office
Office européen des brevets

(11) EP 3 321 719 B1

(12) EUROPEAN PATENT SPECIFICATION

(45) Date of publication and mention of the grant of the patent:
**01.12.2021 Bulletin 2021/48**

(21) Application number: **16821256.1**

(22) Date of filing: **24.06.2016**

(51) Int Cl.:
***G02B 5/30*** *(2006.01)* ***G02B 5/26*** *(2006.01)*
***G02F 1/1335*** *(2006.01)* ***G02F 1/13363*** *(2006.01)*
***G09F 9/00*** *(2006.01)* ***G09F 19/16*** *(2006.01)*
*B60R 1/12 (2006.01)*

(86) International application number:
**PCT/JP2016/068903**

(87) International publication number:
**WO 2017/006787 (12.01.2017 Gazette 2017/02)**

# (54) MIRROR EQUIPPED WITH IMAGE DISPLAY FUNCTION

SPIEGEL MIT BILDANZEIGEFUNKTION

MIROIR ÉQUIPÉ D'UNE FONCTION D'AFFICHAGE D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2015 JP 2015137026**

(43) Date of publication of application:
**16.05.2018 Bulletin 2018/20**

(73) Proprietor: **FUJIFILM Corporation**
**Tokyo 106-8620 (JP)**

(72) Inventors:
- **ICHIHASHI Mitsuyoshi**
**Ashigara-kami-gun**
**Kanagawa 258-8577 (JP)**
- **WATANO Akiko**
**Ashigara-kami-gun**
**Kanagawa 258-8577 (JP)**
- **SAITOH Yukito**
**Ashigara-kami-gun**
**Kanagawa 258-8577 (JP)**

(74) Representative: **Jeffrey, Philip Michael et al**
**Dehns Germany**
**Theresienstraße 6-8**
**80333 München (DE)**

(56) References cited:
**WO-A1-2011/068852 WO-A1-2015/029958**
**WO-A1-2015/098906 WO-A1-2016/088707**
**WO-A1-2016/088708 JP-A- 2004 184 490**
**JP-A- 2004 184 491 US-A1- 2008 252 833**
**US-B2- 6 661 482**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## BACKGROUND OF THE INVENTION

1. Field of the Invention

The present invention relates to a mirror with an image display function.

2. Description of the Related Art

A mirror with an image display function in which a half mirror is provided on a surface of an image display portion of an image display device to allow the mirror to display an image in a display mode and to allow the mirror to function as a mirror in a non-display mode such as a power-off mode of the image display device has been proposed. For example, WO2014/112325A illustrates a mirror with an image display function using a reflective-type polarizing plate, and as a specific example of the reflective-type polarizing plate, there is a reflective-type polarizing plate using selective reflection of cholesteric liquid crystals.

US 6661482 relates to a polarizing element and an optical element for a liquid crystal display. WO 2015/029958 relates to a luminance-enhancing film and optical sheet member for a liquid crystal display device. US 2008/252833 discloses a mirror device with a switchable cholesteric filter. WO 2011/068852 disclose a rearview mirror assembly with anisotropic polymer laminates.

## SUMMARY OF THE INVENTION

A mirror with an image display function is required to have various kinds of performance, and first, it is desirable to display a brighter image. In addition, even in a case where an image which is displayed by an image display device in the mirror with an image display function is visually recognized in an oblique direction, it is desirable that there is little change in tint (chromaticity) in comparison to a case where the image is visually recognized in a frontal direction. That is, it is desirable to have excellent view angle characteristics. The excellent view angle characteristics means that there is little change in tint (chromaticity) even in a case where the image is visually recognized in an oblique direction, in comparison to a case where the image is visually recognized in a frontal direction.

In general, a rod-like liquid crystal compound is frequently used as a material of a cholesteric liquid crystal layer.

The inventors have conducted studies on the characteristics of a mirror with an image display function using a reflective-type polarizing plate using selective reflection of a cholesteric liquid crystal layer formed using a rod-like liquid crystal compound as described in WO2014/112325A, and found that there is still room for improvement in the above-described brightness and view angle characteristics.

The invention is contrived in view of the circumstances, and an object thereof is to provide a mirror with an image display function which is capable of displaying a brighter image and has excellent view angle characteristics.

The inventors have conducted intensive studies on the problems of the related art, and as a result, found that the problems can be solved by using a 1/4 wavelength plate and a disk-like liquid crystal compound.

That is, the inventors have found that the objects can be achieved with the following configuration.

(1) According to an aspect, there is provided a mirror with an image display function as claimed in claim 1.

According to the invention, it is possible to provide a mirror with an image display function which is capable of displaying a brighter image and has excellent view angle characteristics.

## BRIEF DESCRIPTION OF THE DRAWINGS

Fig. 1 is a cross-sectional view of a first embodiment of a mirror with an image display function.
Fig. 2 is a cross-sectional view of a second embodiment of the mirror with an image display function.

## DESCRIPTION OF THE PREFERRED EMBODIMENTS

Hereinafter, the invention will be described in detail.

In this specification, "to" is used to mean that numerical values before and after "to" are included as a lower limit value and an upper limit value.

In this specification, an angle such as "45°", "parallel", "vertical", or "perpendicular" means that a difference from an exact angle is in a range less than 5 degrees unless otherwise stated. The difference from an exact angle is

preferably less than 4 degrees, and more preferably less than 3 degrees.

In this specification, "(meth)acrylate" is used to mean "one or both of acrylate and methacrylate".

In this specification, when "selectively" is used in regard to circularly polarized light, it means that the light quantity of any one of a right circular polarization component and a left circular polarization component of emitted light is greater than that of the other circular polarization component. Specifically, when "selectively" is used, the circular polarization degree of light is preferably 0.3 or greater, more preferably 0.6 or greater, and even more preferably 0.8 or greater. Substantially, the circular polarization degree is yet even more preferably 1.0.

Here, the circular polarization degree is a value which is expressed by $|I_R-I_L| /(I_R+I_L)$ where the intensity of a right circular polarization component of light is represented by $I_R$, and the intensity of a left circular polarization component is represented by $I_L$.

In this specification, when "sense" is used in regard to circularly polarized light, it means that the light is either right-circularly polarized light or left-circularly polarized light. The sense of circularly polarized light is defined such that, in a case where light is viewed as it proceeds toward an observer and in a case where the tip of an electric field vector rotates clockwise with the increase in time, the light is right-circularly polarized light, and in a case where it rotates counterclockwise, the light is left-circularly polarized light.

In this specification, the term "sense" may be used in regard to a twisted direction of the helix of cholesteric liquid crystal. Regarding selective reflection by cholesteric liquid crystal, in a case where a twisted direction (sense) of the helix of the cholesteric liquid crystal is right-handed, the right-circularly polarized light is reflected and the left-circularly polarized light is transmitted. In a case where the sense is left-handed, the left-circularly polarized light is reflected, and the right-circularly polarized light is transmitted.

In electromagnetic rays, visible light is light in a wavelength region human’s eyes can see, and refer to light in a wavelength region of 380 nm to 780 nm. That is, the visible light region means a region of 380 to 780 nm. Infrared rays (infrared light) are electromagnetic rays in a wavelength region longer than visible light rays and shorter than radio waves. That is, the infrared light region means a region of wavelengths of 780 nm or greater, shorter than radio waves, and is preferably in a region of 780 to 2500 nm.

A characteristic of the invention is that with the use of a 1/4 wavelength plate, a disk-like liquid crystal compound is used as a material of the 1/4 wavelength plate or a circular polarization reflection layer.

First, a 1/4 wavelength plate is disposed between an image display device and a circular polarization reflection layer, and thus it is possible to convert linearly polarized light emitted from the image display device such as a liquid crystal display device into circularly polarized light by the 1/4 wavelength plate, and to allow the converted circularly polarized light to enter the circular polarization reflection layer having transmission characteristics. In such an aspect, the light reflected by the circular polarization reflection layer and returning to the image display device side can be significantly reduced, and thus a bright image can be displayed. In an aspect in which the 1/4 wavelength plate is not used as in the related art, about a half of the light emitted from the image display device is reflected by the circular polarization reflection layer.

In addition, according to the invention, a layer formed of a liquid crystal composition containing a disk-like liquid crystal compound is included as the 1/4 wavelength plate or the circular polarization reflection layer, and thus view angle characteristics are particularly improved. The view angle characteristics are greatly improved in a case where a layer formed using a disk-like liquid crystal compound and a layer formed using a rod-like liquid crystal compound are used in combination as the 1/4 wavelength plate and the circular polarization reflection layer. Examples of other effects of using a disk-like liquid crystal compound include an improvement in brightness and an improvement in visibility through polarizing sunglasses.

In addition, in the mirror with an image display function according to the invention, an image can be visually recognized easily even in a case where polarizing sunglasses are used.

## «First Embodiment»

Hereinafter, a first embodiment of the mirror with an image display function according to the invention will be described with reference to the drawing. Fig. 1 shows a cross-sectional view of the first embodiment of the mirror with an image display function according to the invention. In the invention, the drawing is a schematic diagram, and the relationship between the thicknesses of the layers, the positional relationship, and the like do not coincide with the actual relationships. The same is applied to the subsequent drawing.

A mirror 10 with an image display function has an image display device 12, a 1/4 wavelength plate 14, and a circular polarization reflection layer 16 in this order. The circular polarization reflection layer 16 has a first cholesteric liquid crystal layer 18 which selectively reflects red light, a second cholesteric liquid crystal layer 20 which selectively reflects blue light, and a third cholesteric liquid crystal layer 22 which selectively reflects green light.

As described above, in the mirror 10 with an image display function according to the invention, the 1/4 wavelength plate 14 is disposed between the image display device 12 and the circular polarization reflection layer 16, and thus the

light from the image display device 12 can be converted into circularly polarized light and allowed to enter the circular polarization reflection layer 16.

In addition, any one of the 1/4 wavelength plate 14, the first cholesteric liquid crystal layer 18, the second cholesteric liquid crystal layer 20, and the third cholesteric liquid crystal layer 22 is a layer formed of a liquid crystal composition containing a disk-like liquid crystal compound, and thus the mirror 10 with an image display function has improved view angle characteristics.

As shown in Fig. 1, it is preferable that the image display device 12 and the 1/4 wavelength plate 14 are in direct contact with each other, and the 1/4 wavelength plate 14 and the circular polarization reflection layer 16 are in direct contact with each other. However, the invention is not limited to this aspect, and other layers (for example, adhesive layer, transparent substrate, and the like) may be disposed between the image display device 12 and the 1/4 wavelength plate 14, or between the 1/4 wavelength plate 14 and the circular polarization reflection layer 16.

Hereinafter, constituent members of the mirror 10 with an image display function will be described in detail.

<Image Display Device>

The type of the image display device is not particularly limited, and the image display device is preferably a liquid crystal display device. In addition, the image display device is preferably an image display device which emits (emits) linearly polarized light to form an image.

The liquid crystal display device may be a transmission type or a reflection type, and is particularly preferably a transmission type. The liquid crystal display device may be a liquid crystal display device of any one of an in-place-switching (IPS) mode, a fringe field switching (FFS) mode, a virtical alignment (VA) mode, an electrically controlled birefringence (ECB) mode, a super twisted nematic (STN) mode, a twisted nematic (TN) mode, an optically compensated bend (OCB) mode, and the like. In a power-off mode of the image display device, the average visible light reflectance at a wavelength of 400 to 700 nm is preferably 20% or greater, and more preferably 30% or greater. In a power-off mode of the image display device, the reflection of visible light may be derived from the constituent member (for example, reflective polarizing plate or v-backlight unit) of the image display device.

The image which is displayed on an image display portion of the image display device may be a still image, a motion picture, or simple texture information. The display may be monochrome display such as black and white display, multi-color display, or full-color display.

<1/4 Wavelength Plate (λ/4 Wavelength Plate)>

The 1/4 wavelength plate is a retardation plate having a function of converting linearly polarized light with a specific wavelength into circularly polarized light (or converting circularly polarized light into linearly polarized light). More specifically, the 1/4 wavelength plate is a retardation plate in which the retardation at a predetermined wavelength λ nm (preferably wavelength in a visible light region) satisfies Re (λ)≈λ/4 (or odd multiple thereof).

In the adhesion of the 1/4 wavelength plate to the image display device, the angle of the 1/4 wavelength plate is preferably adjusted such that the image is made brightest. That is, particularly, in order to allow linearly polarized light to be most satisfactorily transmitted through the image display device which displays an image with linearly polarized light, the relationship between a polarization direction (transmission axis) of the linearly polarized light and a slow axis of the 1/4 wavelength plate is preferably adjusted. For example, in a case of a single layer-type 1/4 wavelength plate to be described later, the polarization direction (transmission axis) and the slow axis of the 1/4 wavelength plate preferably form an angle of 45°. The light emitted from the image display device which displays an image with linearly polarized light is transmitted through the 1/4 wavelength plate, and then becomes circularly polarized light of any one of right sense and left sense. The circular polarization reflection layer to be described later is preferably composed of a cholesteric liquid crystal layer having a twisted direction in which the circularly polarized light of the above-described sense is transmitted.

Examples of the 1/4 wavelength plate include a single layer-type 1/4 wavelength plate and a broadband 1/4 wavelength plate in which a 1/4 wavelength plate and a 1/2 wavelength plate are laminated. The 1/2 wavelength plate is a retardation plate in which the retardation at a predetermined wavelength λ nm (preferably wavelength in a visible light region) satisfies Re (λ)≈λ/2.

The front phase difference of the former 1/4 wavelength plate may be 1/4 of the wavelength of the light emitted from the image display device. Therefore, as the 1/4 wavelength plate, a retardation layer which exhibits inverse dispersibility such that for example, in a case where the wavelength of the light emitted from the image display device is 450 nm, 530 nm, or 640 nm, the front phase difference is 112.5 nm±10 nm (preferably 112.5 nm±5 nm, and more preferably 112.5 nm) with a wavelength of 450 nm, the front phase difference is 132.5 nm±10 nm, (preferably 132.5 nm±5 nm, and more preferably 132.5 nm) with a wavelength of 530 nm, and the front phase difference is 160 nm±10 nm, (preferably 160 nm±5 nm, and more preferably 160 nm) with a wavelength of 640 nm is most preferable.

As the 1/4 wavelength plate, a retardation plate which exhibits small wavelength dispersibility of phase difference or a retardation plate which exhibits forward dispersibility can also be used. The inverse dispersibility means a property that as the longer the wavelength, the larger the absolute value of the phase difference. The forward dispersibility means a property that as the shorter the wavelength, the larger the absolute value of the phase difference.

In the lamination-type 1/4 wavelength plate, the 1/4 wavelength plate and the 1/2 wavelength plate are bonded such that a slow axis of the 1/4 wavelength plate and a slow axis of the 1/2 wavelength plate form an angle of 60°, and it is preferable that the 1/2 wavelength plate side is disposed on the side on which linearly polarized light is incident, and the slow axis of the 1/2 wavelength plate intersects with the polarization direction (transmission axis) of the incident linearly polarized light at 15° or 75°.

In this specification, the phase difference means front retardation. The phase difference can be measured using a polarization phase difference analyzer AxoScan manufactured by AXOMETRICS, INC. The phase difference may be measured by making light with a specific wavelength incident in a film normal direction in KOBRA 21ADH or WR (manufactured by Oji Scientific Instruments).

The 1/4 wavelength plate is not particularly limited, and can be appropriately selected in accordance with the purpose. Examples thereof include a quartz plate, a stretched polycarbonate film, a stretched norbornene-based polymer film, a transparent film containing aligned inorganic grains having birefringence such as strontium carbonate, and a thin film in which an inorganic dielectric material is obliquely vapor-deposited on a support.

Examples of the 1/4 wavelength plate include (1) a retardation plate described in JP1993-27118A (JP-H05-27118A) and JP1993-27119A (JP-H05-27119A) in which a birefringent film having large retardation and a birefringent film having small retardation are laminated such that optical axes thereof are perpendicular to each other, (2) a retardation plate described in JP1998-68816A (JP-H10-68816A) in which a polymer film having a $\lambda/4$ wavelength at a specific wavelength and a polymer film made of the same material as the former polymer film and having a $\lambda/2$ wavelength at the same wavelength are laminated to obtain a $\lambda/4$ wavelength in a wide wavelength region, (3) a retardation plate described in JP1998-90521 (JP-H10-90521), capable of achieving a $\lambda/4$ wavelength in a wide wavelength region by laminating two polymer films, (4) a retardation plate capable of achieving a $\lambda/4$ wavelength in a wide wavelength region by using a modified polycarbonate film described in WO00/26705A, and (5) a retardation plate capable of achieving a $\lambda/4$ wavelength in a wide wavelength region by using cellulose acetate film described in WO00/65384A.

A commercially available product can also be used as the 1/4 wavelength plate. Examples of the commercially available product include PURE-ACE WR (product name) (manufactured by TEIJIN LIMITED).

The 1/4 wavelength plate may be formed by arranging and fixing a polymerizable liquid crystal compound or a polymer liquid crystal compound, and is preferably a layer formed by curing of a liquid crystal composition containing a polymerizable liquid crystal compound. For example, the 1/4 wavelength plate can be formed by coating a surface of a temporary support, a surface of an alignment layer, or a surface of a front surface plate to be described later with a liquid crystal composition, forming a liquid crystal state in which a polymerizable liquid crystal compound in the liquid crystal composition is aligned in a nematic manner, and then fixing the alignment by photo-crosslinking or thermal crosslinking. Details of the liquid crystal composition or the producing method thereof will be described later.

In addition, the 1/4 wavelength plate may be a layer which is obtained by coating a surface of a temporary support, a surface of an alignment layer, or a surface of a front surface plate with a composition containing a polymer liquid crystal compound, subjecting the polymer liquid crystal compound to nematic alignment, and then fixing the alignment by cooling.

As will be described later in detail, the 1/4 wavelength plate may include a layer formed of a liquid crystal composition containing a disk-like liquid crystal compound.

For example, in a case where the 1/4 wavelength plate has a single layer structure, the 1/4 wavelength plate may be a layer formed of a liquid crystal composition containing a disk-like liquid crystal compound, and in a case where the 1/4 wavelength plate has a multi-layer structure, one or more layers formed of a liquid crystal composition containing a disk-like liquid crystal compound may constitute the 1/4 wavelength plate.

<Circular Polarization Reflection Layer>

The circular polarization reflection layer is a layer including a cholesteric liquid crystal layer of which the central wavelength of a selective reflection band (selective reflection wavelength band) is positioned in a visible light region (selective reflection is shown in a visible light region). That is, the circular polarization reflection layer includes a predetermined cholesteric liquid crystal layer, and the central wavelength of a band (reflection band) in which the predetermined cholesteric liquid crystal layer performs selective reflection is positioned in a visible light region. The configuration of the cholesteric liquid crystal layer will be described later in detail.

In Fig. 1, the circular polarization reflection layer 16 includes three cholesteric liquid crystal layers, that is, the first cholesteric liquid crystal layer 18 which reflects red light, the second cholesteric liquid crystal layer 20 which reflects blue light, and the third cholesteric liquid crystal layer 22 which selectively reflects green light.

The aspect of the invention is not limited to the aspect of Fig. 1. The circular polarization reflection layer includes at least two cholesteric liquid crystal layers which has been described above, and the number of cholesteric liquid crystal layers may be two, or four or more. The circular polarization reflection layer includes two or more cholesteric liquid crystal layers, and more preferably three or more cholesteric liquid crystal layers.

The central wavelengths of selective reflection bands of the respective cholesteric liquid crystal layers are different from each other.

The circular polarization reflection layer may include other layers such as an alignment layer. However, the circular polarization reflection layer preferably consists only of a cholesteric liquid crystal layer. The circular polarization reflection layer includes a plurality of cholesteric liquid crystal layers, and each of these is preferably in direct contact with an adjacent cholesteric liquid crystal layer.

The thickness of the circular polarization reflection layer is preferably 2.0 to 300 μm, and more preferably 5.0 to 200 μm.

Examples of the preferable aspect of the first cholesteric liquid crystal layer 18 which selectively reflects red light include a cholesteric liquid crystal layer of which a central wavelength of a selective reflection band is in 580 nm to 700 nm. Examples of the preferable aspect of the second cholesteric liquid crystal layer 20 which selectively reflects blue light include a cholesteric liquid crystal layer of which a central wavelength of a selective reflection band is in 400 nm to less than 500 nm. Examples of the preferable aspect of the three cholesteric liquid crystal layers of the third cholesteric liquid crystal layer 22 which selectively reflects green light include a cholesteric liquid crystal layer of which a central wavelength of a selective reflection band is in 500 nm to less than 580 nm.

In Fig. 1, the first cholesteric liquid crystal layer 18, the second cholesteric liquid crystal layer 20, and the third cholesteric liquid crystal layer 22 are disposed from a side close to the image display device 12. However, the invention is not limited to this aspect, and the above-described three layers may be disposed in any order.

The circular polarization reflection layer includes a plurality of cholesteric liquid crystal layers as shown in Fig. 1, and according to the invention a cholesteric liquid crystal layer closer to the image display device has a longer central wavelength of a selective reflection band (on the longer wavelength side). With such a configuration, it is possible to further suppress a tint at an angle in a display image and in a mirror-reflected image.

According to the invention, at least one of the 1/4 wavelength plate or the circular polarization reflection layer includes a layer formed of a liquid crystal composition containing a disk-like liquid crystal compound.

More specifically, in Fig. 1, any of the 1/4 wavelength plate 14, the first cholesteric liquid crystal layer 18, the second cholesteric liquid crystal layer 20, and the third cholesteric liquid crystal layer 22 may be a layer formed of a liquid crystal composition containing a disk-like liquid crystal compound.

The 1/4 wavelength plate and all of the layers included in the circular polarization reflection layer may be layers formed of a liquid crystal composition containing a disk-like liquid crystal compound (hereinafter, also referred to as a disk-like liquid crystal compound layer), but in view of more excellent view angle characteristics, it is preferable that at least one of the 1/4 wavelength plate or the circular polarization reflection layer includes a layer formed of a liquid crystal composition containing a rod-like liquid crystal compound (hereinafter, also referred to as a rod-like liquid crystal compound layer). That is, it is preferable that at least one of the 1/4 wavelength plate or the circular polarization reflection layer includes a disk-like liquid crystal compound layer, and at least one of the 1/4 wavelength plate or the circular polarization reflection layer includes a rod-like liquid crystal compound layer.

For example, in Fig. 1, the 1/4 wavelength plate 14 and the first cholesteric liquid crystal layer 18 may be disk-like liquid crystal compound layers, and the second cholesteric liquid crystal layer 20 and the third cholesteric liquid crystal layer 22 may be rod-like liquid crystal compound layers.

In view of more excellent view angle characteristics, the circular polarization reflection layer preferably includes both of a disk-like liquid crystal compound layer and a rod-like liquid crystal compound layer.

As described above, the circular polarization reflection layer includes a plurality of (preferably, three or more) cholesteric liquid crystal layers, and it is preferable that among the plurality of cholesteric liquid crystal layers, at least one is a disk-like liquid crystal compound layer and at least one is a rod-like liquid crystal compound layer.

Particularly, in a case where the circular polarization reflection layer includes both of a disk-like liquid crystal compound layer and a rod-like liquid crystal compound layer, it is preferable that of the two, a smaller number of layers included in the circular polarization reflection layer are disposed closer to the 1/4 wavelength plate.

For example, in a case where the number of any one of a disk-like liquid crystal compound layer and a rod-like liquid crystal compound layer included in the circular polarization reflection layer is one, and the number of the other of the disk-like liquid crystal compound layer and the rod-like liquid crystal compound layer included in the circular polarization reflection layer is two or more, it is preferable that any one of the disk-like liquid crystal compound layer and the rod-like liquid crystal compound layer, the number of which is one, is disposed closer to the 1/4 wavelength plate. More specifically, in Fig. 1, the first cholesteric liquid crystal layer 18 may be composed of a disk-like liquid crystal compound layer, and each of the second cholesteric liquid crystal layer 20 and the third cholesteric liquid crystal layer 22 may be composed of a rod-like liquid crystal compound layer. In addition, for example, the first cholesteric liquid crystal layer

18 may be composed of a rod-like liquid crystal compound layer, and each of the second cholesteric liquid crystal layer 20 and the third cholesteric liquid crystal layer 22 may be composed of a disk-like liquid crystal compound layer.

(Cholesteric Liquid Crystal Layer)

In this specification, the cholesteric liquid crystal layer means a layer in which a cholesteric liquid crystalline phase is fixed. The cholesteric liquid crystal layer may be simply referred to as a liquid crystal layer.

The cholesteric liquid crystalline phase has been known to exhibit circular polarization selective reflection in which circularly polarized light of any one sense of either right-circularly polarized light or left-circularly polarized light is selectively reflected and circularly polarized light of the other sense is transmitted in a specific wavelength region. In this specification, the circular polarization selective reflection may be simply referred to as selective reflection.

As a layer in which a cholesteric liquid crystalline phase exhibiting circular polarization selective reflectivity is fixed, many layers formed of a composition containing a polymerizable liquid crystal compound have been known, and regarding the cholesteric liquid crystal layer, the related arts can be referred to.

The cholesteric liquid crystal layer may be a layer in which alignment of a liquid crystal compound in a cholesteric liquid crystalline phase is held. Typically, the cholesteric liquid crystal layer is preferably a layer obtained in such a manner that a polymerizable liquid crystal compound is allowed to be in an alignment state of a cholesteric liquid crystalline phase, and polymerized and cured by ultraviolet irradiation, heating, or the like to form a layer having no fluidity, and at the same time, the layer is changed such that the form of alignment is not changed by an external field or an external force. In the cholesteric liquid crystal layer, the optical properties of the cholesteric liquid crystalline phase just need to be held in the layer, and the liquid crystal compound in the layer may not exhibit liquid crystallinity. For example, the molecular weight of the polymerizable liquid crystal compound may be increased by a curing reaction, and the liquid crystallinity may be lost.

A central wavelength $\lambda$ of the selective reflection band of the cholesteric liquid crystal layer depends on a pitch P (periodicity of helix) of a helical structure in a cholesteric liquid crystal phase, and has a relationship of $\lambda = n \times P$ with an average refractive index n of the cholesteric liquid crystal layer.

In this specification, the central wavelength $\lambda$ of the selective reflection band of the cholesteric liquid crystal layer means a wavelength at a central position of a circular polarization reflection spectrum measured in a normal direction of the cholesteric liquid crystal layer.

As is obvious from the above formula, the central wavelength of selective reflection can be adjusted by adjusting the pitch of the helical structure. By adjusting the n value and the P value, any one of right-circularly polarized light and left-circularly polarized light is selectively reflected with respect to light with a desired wavelength, and thus the central wavelength $\lambda$ can be adjusted.

In a case where light is obliquely incident on the cholesteric liquid crystal layer, the central wavelength of the selective reflection band shifts to the short wavelength side. Therefore, with respect to the wavelength of the selective reflection band necessary for image display, $n \times P$ is preferably adjusted such that $\lambda$ calculated in accordance with the above formula $\lambda = n \times P$ becomes a long wavelength. When the central wavelength of the selective reflection band when light rays pass through a cholesteric liquid crystal layer with a refractive index n2 in a normal direction of the cholesteric liquid crystal layer (a helical axis direction of the cholesteric liquid crystal layer) at an angle of $\theta_2$ is represented by $\lambda_d$, $\lambda_d$ is expressed by the following formula.

$$\lambda_d = n_2 \times P \times \cos\theta_2$$

In the mirror with an image display function according to the invention, in view of further suppressing a tint in a display image and in a mirror-reflected image viewed in an oblique direction, the circular polarization reflection layer preferably includes a cholesteric liquid crystal layer of which a central wavelength of a selective reflection band is in an infrared light region. In this case, the central wavelength of the selective reflection band in the infrared light region is specifically preferably 780 to 900 nm, and more preferably 780 to 850 nm.

Since the pitch of the cholesteric liquid crystalline phase depends on the type or the concentration of a chiral agent which is used together with the liquid crystal compound (preferably, polymerizable liquid crystal compound), a desired pitch can be obtained by adjusting the type or the concentration. Furthermore, methods described in "Introduction to Liquid Crystal Chemical Test", p. 46, edited by Japan Liquid Crystal Society, published by Sigma Publications, 2007, and "Liquid Crystal Handbook", p. 196, Liquid Crystal Handbook Editing Committee Maruzen can be used as a method of measuring the sense or the pitch of the helix.

In a case where the central wavelength of the selective reflection band of the cholesteric liquid crystal layer to be used is adjusted in accordance with the wavelength region of light emitted from the image display device and the use mode of the circular polarization reflection layer, a bright image can be displayed with high light utilization efficiency.

Examples of the use mode of the circular polarization reflection layer include an incidence angle of light on the circular polarization reflection layer and an image observation direction.

The sense of the reflected circularly polarized light of the cholesteric liquid crystal layer is identical to the sense of the helix. As each cholesteric liquid crystal layer, a cholesteric liquid crystal layer in which the sense of the helix is right-handed or left-handed in accordance with the sense of circularly polarized light of a sense obtained by emission from the image display device and transmission through the 1/4 wavelength plate is used. Specifically, a cholesteric liquid crystal layer having a sense of a helix which transmits circularly polarized light of a sense obtained by emission from the image display device and transmission through the 1/4 wavelength plate may be used. The circular polarization reflection layer includes a plurality of cholesteric liquid crystal layers, and senses of helices thereof are preferably the same.

A half-width $\Delta\lambda$ (nm) of a selective reflection band in which selective reflection is exhibited depends on the birefringence $\Delta n$ of the liquid crystal compound and the pitch P, and has a relationship of $\Delta\lambda=\Delta n\times P$ therewith. Therefore, the width of the selective reflection band can be controlled by adjusting $\Delta n$. $\Delta n$ can be adjusted by adjusting the type and/or the mixing ratio of the polymerizable liquid crystal compound or controlling the temperature at the time of alignment fixing.

In order to form one type of cholesteric liquid crystal layers which are the same in central wavelength of the selective reflection band, a plurality of cholesteric liquid crystal layers having the same periodicity P and the same sense of the helix may be laminated. By laminating cholesteric liquid crystal layers having the same periodicity P and the same sense of the helix, circular polarization selectivity can be increased at a specific wavelength.

<Method of Producing 1/4 Wavelength Plate and Cholesteric Liquid Crystal Layer>

Hereinafter, materials and methods for producing the 1/4 wavelength plate and the cholesteric liquid crystal layer which are formed of a liquid crystal composition will be described.

Examples of the material used to form the 1/4 wavelength plate include a liquid crystal composition containing a liquid crystal compound (preferably, polymerizable liquid crystal compound). Examples of the material used to form the cholesteric liquid crystal layer include a liquid crystal composition containing a liquid crystal compound (preferably, polymerizable liquid crystal compound) and a chiral agent (optical active compound). In the liquid crystal composition, a surfactant, a polymerization initiator, a solvent, or the like may be contained if necessary.

The 1/4 wavelength plate or the cholesteric liquid crystal layer can be formed by coating a base (for example, support, temporary support, alignment layer, 1/4 wavelength plate, or cholesteric liquid crystal layer serving as underlayer) or the like with the above-described liquid crystal composition, aligning the liquid crystal compound, and then fixing the alignment by curing the liquid crystal composition.

As described above, according to the invention, the 1/4 wavelength plate and the circular polarization reflection layer include a layer formed of a liquid crystal composition containing a disk-like liquid crystal compound, and thus as the liquid crystal compound, a disk-like liquid crystal compound is used in a case where at least one of the 1/4 wavelength plate or the circular polarization reflection layer is manufactured.

(Liquid Crystal Compound)

Liquid crystal compounds can be classified into rod-like types (rod-like liquid crystal compounds) and disk-like types (disk-like liquid crystal compounds). Further, rod-like liquid crystal compounds and disk-like liquid crystal compounds respectively have low molecule types and high molecule types. The high molecule generally refers to a molecule having a degree of polarization of 100 or more (Polymer Physics and Phase Transition Dynamics, written by Masao Doi, page 2, Iwanami Shoten, 1992). According to the invention, any liquid crystal compound can be used, but as described above, a disk-like liquid crystal compound is used in manufacturing of any one of the 1/4 wavelength plate and the circular polarization reflection layer. Two or more types of rod-like liquid crystal compounds, two or more types of disk-like liquid crystal compounds, or a mixture of a rod-like liquid crystal compound and a disk-like liquid crystal compound may be used.

As the rod-like liquid crystal compound, for example, those described in Claim 1 in JP1999-513019A (JP-H11-513019A) or paragraphs [0026] to [0098] in JP2005-289980A can be preferably used, and as the disk-like liquid crystal compound, for example, those described in paragraphs [0020] to [0067] in JP2007-108732A or paragraphs [0013] to [0108] in JP2010-244038A can be preferably used. However, the liquid crystal compounds are not limited thereto.

As other examples of the disk-like liquid crystal compound, those described in JP2007-108732A or JP2010-244038A can be preferably used.

Hereinafter, preferable examples of the disk-like liquid crystal compound will be shown, but the invention is not limited thereto.

Compound 1

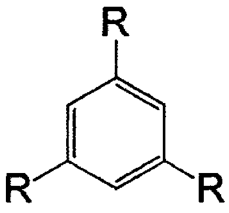

R =

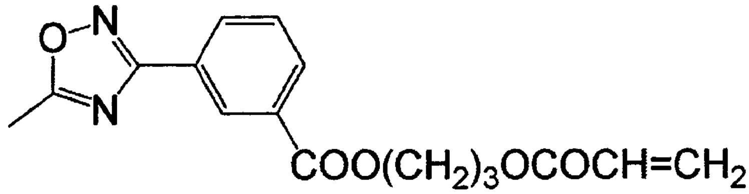

Compound 2

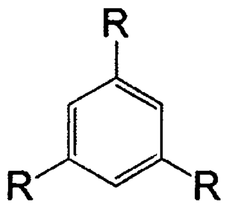

R =

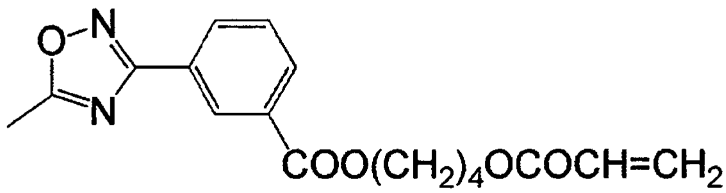

Compound 101

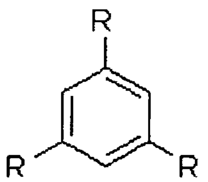

R =

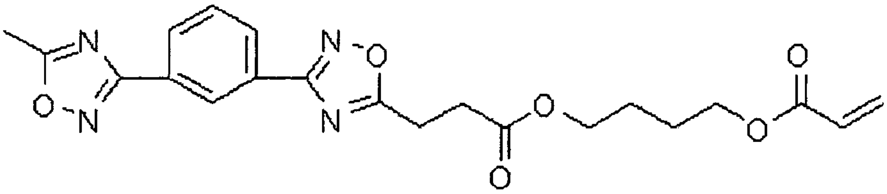

Compound 102

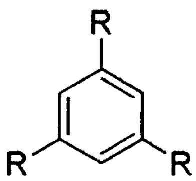

R=

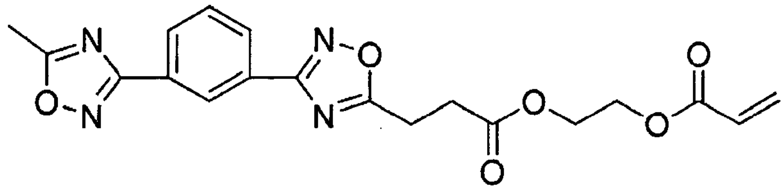

As the liquid crystal compound, a polymerizable liquid crystal compound having a polymerizable group is preferably used. The type of the polymerizable group contained in the rod-like liquid crystal compound or the disk-like liquid crystal compound is not particularly limited, and examples of the polymerizable group include an unsaturated polymerizable group, an epoxy group, and an aziridinyl group. An unsaturated polymerizable group is preferable, and an ethylenically unsaturated polymerizable group is more preferable. The polymerizable group can be introduced in molecules of a liquid crystal compound by various methods. The number of the polymerizable groups in the polymerizable liquid crystal compound is preferably 1 to 6, and more preferably 1 to 3. Examples of the polymerizable liquid crystal compound include those described in Makromol. Chem., vol. 190, p. 2255 (1989), Advanced Materials, vol. 5, p. 107 (1993), US4683327A, US5622648A, US5770107A, WO95/22586A, WO95/24455A, WO97/00600A, WO98/23580A, WO98/52905A, JP1989-272551A (JP-H01-272551A), JP1994-16616A (JP-H06-16616A), JP1995-110469A (JP-H07-110469A), JP1999-80081A (JP-H11-80081A), and JP2001-328973A. Two or more types of polymerizable liquid crystal compounds may be used in combination. Using two or more types of polymerizable liquid crystal compounds may contribute to lowering the alignment temperature.

The amount of the liquid crystal compound (particularly, polymerizable liquid crystal compound) added in the liquid crystal composition is preferably 80 to 99.9 mass%, more preferably 85 to 99.5 mass%, and particularly preferably

90 to 99 mass% with respect to the solid content mass of the liquid crystal composition (mass excluding the mass of the solvent).

(Chiral Agent: Optical Active Compound)

The material used to form the cholesteric liquid crystal layer preferably contains a chiral agent. The chiral agent functions to induce the helical structure of the cholesteric liquid crystalline phase. The chiral compound may be selected in accordance with the purpose since compounds are different in the helix pitch or the sense of the helix to be induced.

The chiral agent is not particularly limited, and a known compound (for example, chiral agents for TN or STN, which are described in Liquid Crystal Device Handbook, Third Chapter, 4-3 Chapter, p. 199, edited by No. 142 Committee of Japan Society for the Promotion of Science, in 1989) can be used. Examples of the chiral agent include isosorbide and an isomannide derivative.

The chiral agent may be a liquid crystal compound.

The content of the chiral agent in the liquid crystal composition is preferably 0.01 to 200 mol%, and more preferably 1 to 30 mol% with respect to the content of the liquid crystal compound (particularly, polymerizable liquid crystal compound).

(Polymerization Initiator)

The liquid crystal composition preferably contains a polymerization initiator. In an embodiment in which a polymerization reaction is carried out by ultraviolet irradiation, a polymerization initiator to be used is preferably a photopolymerization initiator capable of initiating a polymerization reaction by ultraviolet irradiation. Examples of the photopolymerization initiator include $\alpha$-carbonyl compounds (described in US2367661A and US2367670A), acyloin ethers (described in US2448828A), $\alpha$-hydrocarbon-substituted aromatic acyloin compounds (described in US2722512A), polynuclear quinone compounds (described in US3046127A and US2951758A), combination of triarylimidazole dimer and p-aminophenylketone (described in US3549367A), acridine and phenazine compounds (described in JP1985-105667A (JP-S60-105667A) and US4239850A), and oxadiazole compounds (described in US4212970A).

The content of the photopolymerization initiator in the liquid crystal composition is preferably 0.1 to 20 mass%, and more preferably 0.5 to 5 mass% with respect to the content of the liquid crystal compound (particularly, polymerizable liquid crystal compound).

(Crosslinking Agent)

The liquid crystal composition may contain a crosslinking agent in order to improve the film hardness after curing and durability. As the crosslinking agent, a material which is curable with ultraviolet rays, heat, moisture, or the like can be suitably used.

The content of the crosslinking agent is preferably 3 to 20 mass%, and more preferably 5 to 15 mass% with respect to the content of the liquid crystal compound (particularly, polymerizable liquid crystal compound).

(Alignment Control Agent)

The liquid crystal composition may contain an alignment control agent which contributes to stable or rapid planar alignment. Examples of the alignment control agent include fluorine (meth)acrylate-based polymers described in paragraphs [0018] to [0043] in JP2007-272185A and compounds represented by Formulae (I) to (IV) described in paragraphs [0031] to [0034] in JP2012-203237A.

The alignment control agents may be used alone or in combination of two or more types thereof.

The content of the alignment control agent added in the liquid crystal composition is preferably 0.01 to 10 mass%, more preferably 0.01 to 5 mass%, and particularly preferably 0.02 to 1 mass% with respect to the content of the liquid crystal compound. (particularly, polymerizable liquid crystal compound)

(Other Additives)

The liquid crystal composition may contain at least one selected from various additives such as a surfactant for uniformizing the film thickness by adjusting the surface tension of the coating film and a polymerizable monomer. Furthermore, the liquid crystal composition may further contain a polymerization inhibitor, an antioxidant, an ultraviolet absorber, a light stabilizer, a coloring material, metal oxide particles, or the like if necessary, within a range in which the optical performance is not deteriorated.

(Solvent)

The liquid crystal composition may contain a solvent. The type of the solvent is not particularly limited, and can be appropriately selected in accordance with the purpose. An organic solvent is preferably used.
The organic solvent is not particularly limited, and can be appropriately selected in accordance with the purpose. Examples thereof include ketones, alkyl halides, amides, sulfoxides, heterocyclic compounds, hydrocarbons, esters, and ethers. These may be used alone or in combination of two or more types thereof. Among these, ketones are preferable in consideration of the load imposed on the environment.

(Coating, Alignment, Polymerization)

The method of coating a base (for example, temporary support, alignment layer, 1/4 wavelength plate, cholesteric liquid crystal layer serving as underlayer, or the like) with a liquid crystal composition is not particularly limited, and can be appropriately selected in accordance with the purpose. Examples thereof include a wire bar coating method, a curtain coating method, an extrusion coating method, a direct gravure coating method, a reverse gravure coating method, a die-coating method, a spin coating method, a dip coating method, a spray coating method, and a slide coating method. Furthermore, by transferring a liquid crystal composition, which has been separately applied onto a support, to a base, a coating film of the liquid crystal composition may be disposed on the base.
By heating the liquid crystal composition applied, the liquid crystal compound is aligned. In the formation of a cholesteric liquid crystal layer, the liquid crystal compound is preferably aligned in a cholesteric manner, and in the formation of the 1/4 wavelength plate, the liquid crystal compound is preferably aligned in a nematic manner. In the cholesteric alignment, the heating temperature is preferably equal to or lower than 200°C, and more preferably equal to or lower than 130°C. By this alignment, a layer is obtained in which the polymerizable liquid crystal compound is aligned in a twisted manner to have a helical axis in a direction substantially perpendicular to the surface of the film.
In the nematic alignment, the heating temperature is preferably 50°C to 120°C, and more preferably 60°C to 100°C.
In a case where a polymerizable liquid crystal compound is used as the liquid crystal compound, the aligned polymerizable liquid crystal compound can be further subjected to polymerization so as to cure the liquid crystal composition. The polymerization may be any one of thermal polymerization and photopolymerization by light irradiation, but is preferably photopolymerization. Ultraviolet rays are preferably used for light irradiation. The irradiation energy is preferably 20 to 50 J/cm$^2$, and more preferably 100 to 1,500 mJ/cm$^2$. In order to accelerate the photopolymerization reaction, the light irradiation may be performed under heating conditions or under a nitrogen atmosphere. The wavelength of the ultraviolet rays for irradiation is preferably 350 to 430 nm. From the viewpoint of stability, the rate of the polymerization reaction is preferably high. The rate of the polymerization reaction is preferably equal to or higher than 70%, and more preferably equal to or higher than 80%. Regarding the rate of the polymerization reaction, the consumption rate of polymerizable functional groups can be determined by using an infrared (IR) absorption spectrum.
The thickness of each cholesteric liquid crystal layer is not particularly limited. The thickness is preferably 1.0 to 150 μm.
The thickness of the 1/4 wavelength plate formed of the liquid crystal composition is not particularly limited. The thickness is preferably 0.2 to 10 μm, and more preferably 0.5 to 2 μm.

(Temporary Support, Support, Alignment Layer)

As described above, the liquid crystal composition may be coated on a surface of a temporary support or an alignment layer formed on the surface of the temporary support to form a layer. The temporary support, or the temporary support and the alignment layer may be peeled off after the formation of the cholesteric liquid crystal layer or the 1/4 wavelength plate.
Particularly, in a case where the 1/4 wavelength plate is formed, a support may be used. The support may not be peeled off after the formation of the layer.
Examples of the material of the temporary support or the support include polyester such as polyethylene terephthalate (PET), polycarbonate, an acrylic resin, an epoxy resin, polyurethane, polyamide, polyolefin, a cellulose derivative, silicone, and glass.
The alignment layer can be provided by means of rubbing of an organic compound (resin such as polyimide, polyvinyl alcohol, polyester, polyarylate, polyamideimide, polyether imide, polyamide, and modified polyamide) such as a polymer, oblique vapor deposition of an inorganic compound, formation of a layer having microgrooves, or accumulation of an organic compound (for example, ω-tricosanoic acid, dioctadecylmethylammonium chloride, and methyl stearate) by a Langmuir-Blodgett method (LB method). Furthermore, an alignment layer may be used which obtains an orientation function by the application of an electric field or a magnetic field or by being irradiated with light.

Particularly, as the alignment layer, an alignment layer composed of a polymer subjected to a rubbing treatment is preferable, and the rubbed surface is preferably coated with the liquid crystal composition. The rubbing treatment can be performed by rubbing the surface of the polymer layer several times with paper or cloth in a certain direction.
The thickness of the alignment layer is preferably 0.01 to 5 μm, and more preferably 0.05 to 2 μm.
The liquid crystal composition may be coated on a surface of a temporary support or a rubbed surface of a temporary support without providing the alignment layer.

(Lamination Film of 1/4 Wavelength Plate and Cholesteric Liquid Crystal Layer)

As described above, the 1/4 wavelength plate and the cholesteric liquid crystal layer can be formed in such a manner that a liquid crystal composition obtained by dissolving, in a solvent, a polymerizable liquid crystal compound and optional additives such as a polymerization initiator, a chiral agent and a surfactant is coated and dried on a base (for example, temporary support, alignment layer, 1/4 wavelength plate, cholesteric liquid crystal layer produced in advance, or the like) to obtain a coating film, and the polymerizable liquid crystal compound is aligned in a desired form in the coating film and then polymerized to fix the alignment. A laminate of the layers formed of the polymerizable liquid crystal compound can be formed by repeating the above-described processes. Some layers or a part of a lamination film may be separately produced and bonded using an adhesive layer.
In the formation of a lamination film of a 1/4 wavelength plate and a cholesteric liquid crystal layer, a lamination film consisting of a plurality of cholesteric liquid crystal layers, or a lamination film consisting of a 1/4 wavelength plate and a plurality of cholesteric liquid crystal layers, a step of directly coating a surface of a 1/4 wavelength plate or a front cholesteric liquid crystal layer with a liquid crystal composition containing a polymerizable liquid crystal compound and the like, an alignment step, and a fixing step may be repeated. Otherwise, a 1/4 wavelength plate, a cholesteric liquid crystal layer, or a laminate thereof prepared separately may be laminated using an adhesive or the like. However, the former is preferable. In general, in a case where an adhesive layer provided to have a thickness of 0.5 to 10 μm is used, interference unevenness resulting from thickness unevenness of the adhesive layer may be observed, and thus it is preferable that the lamination is performed without using the adhesive layer. In addition, in a lamination film of cholesteric liquid crystal layers, in a case where a cholesteric liquid crystal layer is formed so as to be in direct contact with a surface of a cholesteric liquid crystal layer formed previously, an alignment direction of liquid crystal molecules on the air interface side of the cholesteric liquid crystal layer formed previously is identical to an alignment direction of liquid crystal molecules on the lower side of the cholesteric liquid crystal layer formed thereon, and the polarization characteristics of the laminate of the cholesteric liquid crystal layers are enhanced.

<Other Layers>

The mirror with an image display function according to the invention may include layers other than the image display device, the 1/4 wavelength plate, and the circular polarization reflection layer. Hereinafter, arbitrary members will be described in detail.

(Adhesive Layer)

For example, the mirror with an image display function may include an adhesive layer for adhesion between the respective layers as described above. The adhesive layer may be formed of an adhesive.
Adhesives are classified into hot-melt types, thermosetting types, photocurable types, reaction-curable types, and pressure-sensitive types which do not require curing from the viewpoint of curing method. As the materials of these adhesives, it is possible to use compounds based on acrylate, urethane, urethane acrylate, epoxy, epoxy acrylate, polyolefin, modified olefin, polypropylene, ethylene vinyl alcohol, vinyl chloride, chloroprene rubber, cyanoacrylate, polyamide, polyimide, polystyrene, polyvinyl butyral, or the like. From the viewpoint of workability and productivity, photocuring is preferable as the curing method. From the viewpoint of optical transparency and heat resistance, materials based on acrylate, urethane acrylate, epoxy acrylate, or the like are preferably used.

(Support)

The mirror with an image display function may include a support which serves as a substrate in the formation of the 1/4 wavelength plate or the cholesteric liquid crystal layer.
Examples of the support include polyester such as polyethylene terephthalate (PET), polycarbonate, an acrylic resin, an epoxy resin, polyurethane, polyamide, polyolefin, a cellulose derivative, and a plastic film such as silicone.
The thickness of the support may be approximately 5 to 1000 μm, preferably 10 to 250 μm, and more preferably 15 to 90 μm.

(Alignment Layer)

The mirror with an image display function may include an alignment layer as an underlayer which is coated with the liquid crystal composition in the formation of the 1/4 wavelength plate or the cholesteric liquid crystal layer. The description of the alignment layer is as described above.

<Half Mirror>

According to the invention, the laminate of the 1/4 wavelength plate and the circular polarization reflection layer, disposed on the image display device, is also referred to as a half mirror. The half mirror may include a front surface plate to be described later in detail.

The half mirror may be produced by forming, on a front surface plate, a circular polarization reflection layer and a 1/4 wavelength plate in this order from the front surface plate, or by transferring a 1/4 wavelength plate and a circular polarization reflection layer formed on a temporary support onto a front surface plate.

<Method of Producing Mirror with Image Display Function>

The mirror with an image display function according to the invention can be produced by, for example, adhering the 1/4 wavelength plate side of a half mirror including a circular polarization reflection layer and a 1/4 wavelength plate to an image display surface of an image display device.

«Second Embodiment»

Hereinafter, a second embodiment of the mirror with an image display function according to the invention will be described with reference to the drawing. Fig. 2 shows a cross-sectional view of the second embodiment of the mirror with an image display function according to the invention.

A mirror 100 with an image display function has an image display device 12, a 1/4 wavelength plate 14, a circular polarization reflection layer 16, and a front surface plate 24 in this order.

The mirror 100 with an image display function shown in Fig. 2 has the same layers as the mirror 10 with an image display function shown in Fig. 1, except that the front surface plate 24 is provided. The same constituent parts will be denoted by the same references, and the description thereof will be omitted. Hereinafter, a configuration of the front surface plate 24 will be described in detail.

<Front Surface Plate>

The front surface plate may be larger than, the same as, or smaller than the circular polarization reflection layer. The circular polarization reflection layer may be adhered to a part of the front surface plate, and another type of reflection layer such as metal foil may be adhered to or formed on the other portion of the front surface plate.

The circular polarization reflection layer may be adhered to the entire surface of the front surface plate, and the image display device having an image display portion with the same area as the circular polarization reflection layer may be adhered to the circular polarization reflection layer in the image display portion. In this configuration, it is possible to display an image on the entire surface of the mirror.

The type of the front surface plate is not particularly limited. A glass plate or a plastic plate used to produce a usual mirror can be used as the front surface plate. The front surface plate is preferably transparent in a visible light region and preferably has low birefringence. Examples of the front surface plate include a plastic film. Examples of the constituent material of the plastic film include polyester such as polyethylene terephthalate (PET), polycarbonate, an acrylic resin, an epoxy resin, polyurethane, polyamide, polyolefin, a cellulose derivative, and silicone.

As a preferable aspect of the front surface plate, a front surface plate of which haze is 1 or greater is preferable. The haze is more preferably 0.1 or greater. The lower limit thereof is not particularly limited.

In a case where the haze is within the above range, image visibility is further improved.

As a method of measuring the haze, a general hazemeter can be used. For example, NDH4000 (manufactured by NIPPON DENSHOKU INDUSTRIES CO., LTD.) can be used as a measuring device.

The thickness of the front surface plate may be approximately 100 to 10 mm, preferably 200 to 5 mm, and more preferably 500 to 1000 μm.

«Use of Mirror with Image Display Function»

The use of the mirror with an image display function according to the invention is not particularly limited. For

example, it can be used as a security mirror, a mirror of a hair salon or a barbershop, or the like, and can display an image such as texture information, a still image, or a motion picture. In addition, the mirror with an image display function according to the invention may be a vehicle rearview mirror, or may be used for a television, a personal computer, a smartphone, or a cell phone.

[Examples]

Hereinafter, the invention will be described in more detail with reference to examples. The materials, the reagents, the amounts of materials, the proportions thereof, the operations, and the like which will be shown in the following examples can be appropriately modified within a range not departing from the gist of the invention. Accordingly, the scope of the invention is not limited to the following examples.

<Preparation of Rod-Like Liquid Crystalline Mixture (1)>

A compound 1, a compound 2, a fluorine-based horizontal alignment agent 1, a fluorine-based horizontal alignment agent 2, a polymerization initiator, and a solvent were mixed to prepare a rod-like liquid crystalline mixture (1) having the following composition.

| | |
|---|---|
| Compound 1 (rod-like liquid crystal compound 1) | 80 parts by mass |
| Compound 2 (rod-like liquid crystal compound 2) | 20 parts by mass |

| | |
|---|---|
| Fluorine-Based Horizontal Alignment Agent 1 | 0.1 parts by mass |
| Fluorine-Based Horizontal Alignment Agent 2 | 0.007 parts by mass |
| Polymerization Initiator IRGACURE 819 (manufactured by BASF SE) | 3 parts by mass |
| Solvent (methyl ethyl ketone) | The amount thereof was |

set such that the concentration of the solute was 30 mass%.

Compound 1

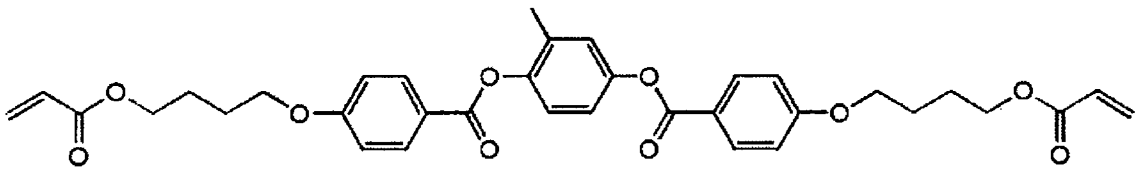

Compound2

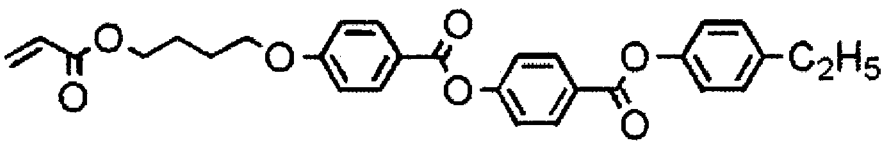

Fluorine-Based Horizontal Alignment Agent 1

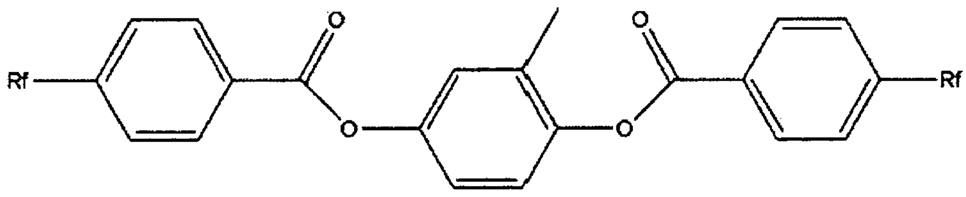

Rf =

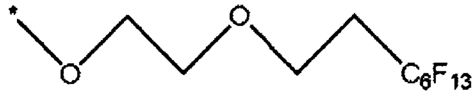

Fluorine-Based Horizontal Alignment Agent 2

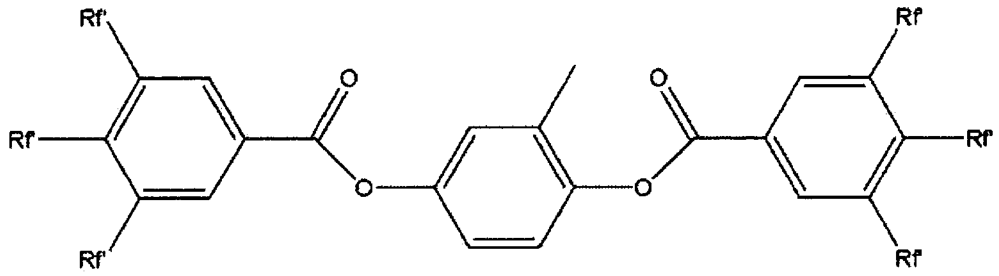

Rf' =

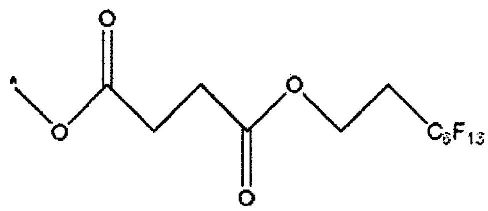

<Formation of 1/4 Wavelength Plate X (transfer-type rod-like liquid crystalline 1/4 wavelength plate)>

A PET film (no undercoat layer, thickness: 75 μm) manufactured by Fujifilm Corporation was prepared as a temporary support and a surface of the temporary support was rubbed. The rod-like liquid crystalline mixture (1) was coated on the rubbed surface of the temporary support at room temperature using a wire bar to obtain a coating film such that the thickness of the film after drying was 0.7 μm. After the solvent was removed by drying the obtained coating film for 30 seconds at room temperature, the film was heated for 2 minutes in an atmosphere at 125°C, and then heated at 85°C to form a nematic liquid crystal phase in the coating film. Next, ultraviolet (UV) irradiation was performed on the coating film for 6 to 12 seconds with an output of 60% using an electrodeless lamp "D-BULB" (90 mW/$cm^2$) manufactured by Fusion UV Systems to fix the rod-like nematic liquid crystal phase, and thus a 1/4 wavelength plate X was obtained.

<Preparation of Disk-Like Liquid Crystalline Mixture (2)>

A compound 101, a compound 102, a compound 4, a compound 5, a polymerization initiator, and a solvent were mixed to prepare a disk-like liquid crystalline mixture (2) having the following composition.

| | |
|---|---|
| Compound 101 (disk-like liquid crystal compound) | 80 parts by mass |
| Compound 102 (disk-like liquid crystal compound) | 20 parts by mass |
| Compound 4 (alignment assistant agent) | 1 part by mass |
| Compound 5 (alignment assistant agent) | 1 part by mass |
| Polymerization Initiator IRGACURE 819 (manufactured by BASF SE) | 3 parts by mass |
| Solvent (methyl ethyl ketone) | The amount thereof was |

set such that the concentration of the solute was 30 mass%.

Compound 101

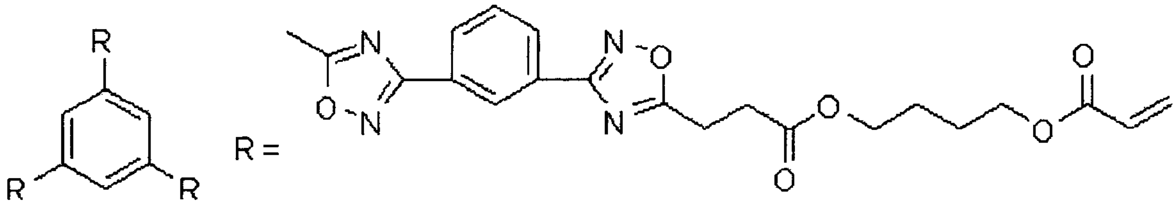

Compound 102

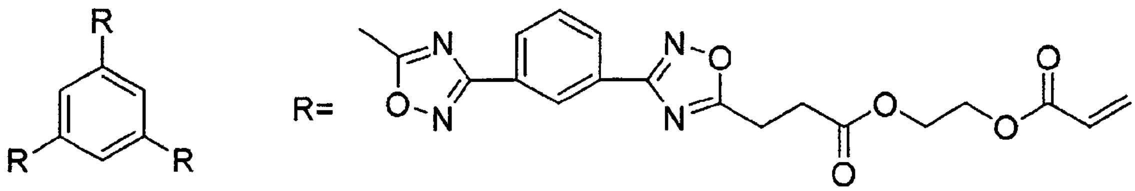

Compound 4 (a mixture of two types of compounds which are different in substitution position of a methyl group in a trimethyl-substituted benzene ring in the following formula. The mixing ratio between the two types of compounds is 50:50 (mass ratio).)

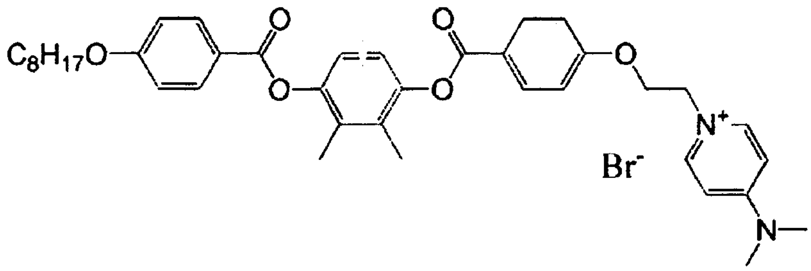

Compound 5

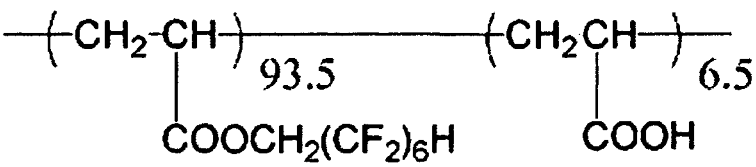

<Formation of 1/4 Wavelength Plate Y (disk-like liquid crystalline 1/4 wavelength plate)>

As an alignment layer, a solution in which the concentration of POVAL PVA-103 manufactured by KURARAY CO., LTD. dissolved in pure water was adjusted such that the thickness of a dried film was 0.5 μm was coated on a cellulose acylate film (FUJITAC TD-80) as a support by bar coating to form a coating film, and then heated for 5 minutes at 100°C. A surface of the coating film was rubbed to form the alignment layer.

Next, the coating bar number was adjusted such that the thickness of a dried film was 1 μm, and the disk-like liquid crystalline mixture (2) was coated on the alignment layer by bar coating. After the solvent was removed by holding for 2 minutes at 80°C, heat-aging was performed for 4 minutes at 100°C to obtain a coating film having a uniform alignment state. The disk-like compound was aligned vertically with respect to the plane of the support.

After that, the coating film was held at 60°C and ultraviolet irradiation was performed on the coating film using a high-pressure mercury lamp under a nitrogen atmosphere to form a 1/4 wavelength plate Y.

<Preparation of Rod-Like Cholesteric Liquid Crystalline Mixture (R1 to R3)>

A compound 1, a compound 2, a fluorine-based horizontal alignment agent 1, a fluorine-based horizontal alignment agent 2, a chiral agent, a polymerization initiator, and a solvent were mixed to prepare a mixture (R) having the following composition.

| | |
|---|---|
| Compound 1 | 80 parts by mass |
| Compound 2 | 20 parts by mass |
| Fluorine-based Horizontal Alignment Agent 1 | 0.1 parts by mass |
| Fluorine-based Horizontal Alignment Agent 2 | 0.007 parts by mass |
| Chiral Agent LC-756 (manufactured by BASF SE) | adjusted in accordance with a target reflection wavelength |
| Polymerization Initiator IRGACURE 819 (manufactured by BASF SE) | 3 parts by mass |
| Solvent (methyl ethyl ketone) | The amount thereof was set such that the concentration of the solute was 30 mass%. |

Mixtures (R1) to (R3) were prepared by adjusting the amount of the chiral agent LC-756 in the mixture (R).

In accordance with the same procedures as in the manufacturing of the 1/4 wavelength plate X, a cholesteric liquid crystal layer which was a single layer was produced on a temporary support using each of the mixtures (R1) to (R3). The reflection characteristics of the obtained cholesteric liquid crystal layers were confirmed, and the central wavelength of a selective reflection band with respect to vertical incident light incident on the layer surface of the cholesteric liquid crystal layer was as shown in the following Table 1. All of the produced cholesteric liquid crystal layers were right circular polarization reflection layers.

[Table 1]

| Mixture | Central Wavelength |
|---|---|
| R1 | 450 nm |
| R2 | 540 nm |
| R3 | 650 nm |

<Preparation of Disk-Like Cholesteric Liquid Crystal Mixture (D1, D2)>

A compound 101, a compound 102, a compound 4, a compound 5, a chiral agent, a polymerization initiator, and a solvent were mixed to prepare a mixture (D) having the following composition.

| | |
|---|---|
| Disk-Like Liquid Crystal Compound (compound 101) | 80 parts by mass |
| Disk-Like Liquid Crystal Compound (compound 102) | 20 parts by mass |
| Compound 4 (alignment assistant agent) | 1 part by mass |
| Compound 5 (alignment assistant agent) | 1 part by mass |
| Chiral Agent (compound 103) | adjusted in accordance with a target reflection wavelength |
| Polymerization Initiator IRGACURE 819 (manufactured by BASF SE) | 3 parts by mass |
| Solvent (methyl ethyl ketone) | The amount thereof was set such that the concentration of the solute was 30 mass%. |

Compound 103

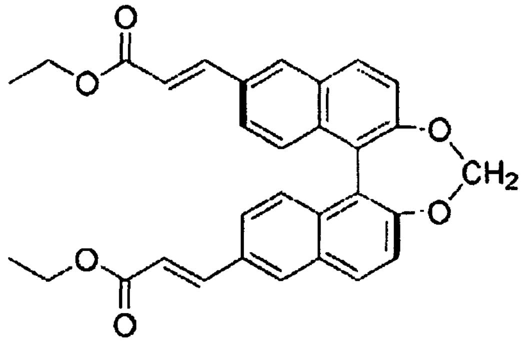

Mixtures (D1) and (D2) were prepared by adjusting the amount of the chiral agent (compound 103) in the mixture (D).

In accordance with the same procedures as in the manufacturing of the 1/4 wavelength plate X, a cholesteric liquid crystal layer which was a single layer was produced on a temporary support using each of the mixtures (D1) and (D2). The reflection characteristics of the obtained cholesteric liquid crystal layers were confirmed, and the central wavelength of a selective reflection band with respect to vertical incident light incident on the layer surface of the cholesteric liquid crystal layer was as shown in the following Table 2. All of the produced cholesteric liquid crystal layers were right circular polarization reflection layers.

[Table 2]

| Mixture | Central Wavelength |
|---|---|
| D1 | 450 nm |
| D2 | 650 nm |

<Manufacturing of Half Mirror of Example 1>

The 1/4 wavelength plate Y formed as described above was coated with the mixture (D2) using a wire bar of which the bar number was adjusted such that the thickness of a dried film was 2.4 μm. After the solvent was removed by holding for 2 minutes at 80°C, heat-aging was performed for 4 minutes at 100°C to obtain a coating film having a uniform cholesteric alignment state. After that, the coating film was held at 60°C and ultraviolet irradiation was performed on the coating film using a high-pressure mercury lamp under a nitrogen atmosphere to fix the alignment, whereby a cholesteric liquid crystal layer (D2) was formed on the 1/4 wavelength plate Y and a 1/4 wavelength plate laminate was obtained.

A PET film (no undercoat layer, thickness: 75 μm) manufactured by Fujifilm Corporation was prepared as a temporary support and a surface of the temporary support was rubbed. Next, the mixture (R2) was coated on the rubbed surface of the temporary support at room temperature using a wire bar to obtain a coating film such that the thickness of the film after drying was 2.8 μm. After the solvent was removed by drying the obtained coating film for 30 seconds at room temperature, the film was heated for 2 minutes in an atmosphere at 100°C. Then, the coating film was held at 60°C and ultraviolet irradiation was performed on the coating film using a high-pressure mercury lamp under a nitrogen atmosphere to fix the alignment, whereby a cholesteric liquid crystal layer (R2) was formed.

The formed cholesteric liquid crystal layer (R2) was coated with the mixture (R1) using a wire bar at room temperature to obtain a coating film such that the thickness of the film after drying was 1.7 μm. After the solvent was removed by drying the obtained coating film for 30 seconds at room temperature, the film was heated for 2 minutes in an atmosphere at 100°C. Then, the coating film was held at 60°C and ultraviolet irradiation was performed on the coating film using a high-pressure mercury lamp under a nitrogen atmosphere to fix the alignment, whereby a cholesteric liquid crystal layer (R1) was formed.

A UV-curable adhesive Exp. U12034-6 manufactured by DIC Corporation was coated using a wire bar at room temperature on a surface of the cholesteric liquid crystal layer of the 1/4 wavelength plate laminate produced as described above such that the thickness of the film after drying was 5 μm.

The surface on which the adhesive had been coated and the surface of the cholesteric liquid crystal layer on the temporary support produced as described above were bonded such that air bubbles did not enter therebetween, and then UV irradiation was performed for 6 to 12 seconds with an output of 60% using D-BULB (lamp, 90 mW/$cm^2$)

manufactured by Fusion UV Systems at 50°C. Thereafter, the temporary support was peeled off and a circular polarization reflection layer (cholesteric liquid crystal layer (D2), cholesteric liquid crystal layer (R1), cholesteric liquid crystal layer (R2)) in which three cholesteric liquid crystal layers were laminated on the 1/4 wavelength plate was produced.

Next, a UV-curable adhesive Exp. U12034-6 manufactured by DIC Corporation was coated using a wire bar at room temperature on a surface of the cholesteric liquid crystal layer positioned opposite to the 1/4 wavelength plate Y of the circular polarization reflection layer produced as described above such that the thickness of the film after drying was 5 μm.

The surface on which the adhesive had been coated and a front surface plate (FLOAT GLASS FL2, manufactured by Central Glass Co., Ltd., thickness: 2 mm, haze: 0.1) were bonded such that air bubbles did not enter therebetween, and then UV irradiation was performed for 6 to 12 seconds with an output of 60% using D-BULB (lamp, 90 $mW/cm^2$) manufactured by Fusion UV Systems at 50°C to produce a half mirror of Example 1.

<Manufacturing of Half Mirror of Example 2>

A half mirror of Example 2 was manufactured in accordance with the same procedures as in Example 1, except that the mixture (D1) was used in place of the mixture (D2), the thickness of the film of the mixture (D1) after drying was changed to 2.1 μm, the mixture (R3) was used in place of the mixture (R2), and the thickness of the film of the mixture (R3) after drying was changed to 2.5 μm.

<Manufacturing of Half Mirror of Example 3>

A PET film (no undercoat layer, thickness: 75 μm) manufactured by Fujifilm Corporation was prepared as a temporary support and a surface of the temporary support was rubbed. Next, the mixture (R2) was coated on the rubbed surface of the temporary support at room temperature using a wire bar to obtain a coating film such that the thickness of the film after drying was 2.9 μm. After the solvent was removed by drying the obtained coating film for 30 seconds at room temperature, the film was heated for 2 minutes in an atmosphere at 100°C. Then, the coating film was held at 60°C and ultraviolet irradiation was performed on the coating film using a high-pressure mercury lamp under a nitrogen atmosphere to form a cholesteric liquid crystal layer (R2).

A cholesteric liquid crystal layer (R1) was formed on a temporary support prepared separately in the same manner as in the above description, except that the mixture (R1) was used in place of the mixture (R2) and the thickness of a dried film was 2.3 μm.

As an alignment layer, a solution in which the concentration of SUNEVER SE-130 (manufactured by NISSAN CHEMICAL INDUSTRIES. LTD.) dissolved in N-methylpyrrolidone was adjusted such that the thickness of a dried film was 0.5 μm was coated on a glass plate by bar coating to form a coating film, and then heated for 5 minutes at 100°C and heated for 1 hour at 250°C. A surface of the coating film was rubbed to form the alignment layer. Next, the mixture (D2) was coated on the alignment layer by bar coating such that the thickness of a dried film was 3.0 μm. After the solvent was removed by holding for 2 minutes at 80°C, heat-aging was performed for 4 minutes at 100°C to obtain a coating film having a uniform alignment state. Then, the coating film was held at 60°C and ultraviolet irradiation was performed on the coating film using a high-pressure mercury lamp under a nitrogen atmosphere to form a cholesteric liquid crystal layer (D2).

On the 1/4 wavelength plate Y produced as described above, a UV-curable adhesive Exp. U12034-6 manufactured by DIC Corporation was coated using a wire bar at room temperature such that the thickness of the film after drying was 5 μm. The surface on which the adhesive had been coated and the cholesteric liquid crystal layer (R2) on the temporary support produced as described above were bonded such that air bubbles did not enter therebetween, and then UV irradiation was performed for 6 to 12 seconds with an output of 60% using D-BULB (lamp, 90 $mW/cm^2$) manufactured by Fusion UV Systems at 50°C. Thereafter, the temporary support was peeled off and a 1/4 wavelength plate laminate was formed.

Next, the above-described adhesive was coated on the cholesteric liquid crystal layer (D2) disposed on the glass plate, and the cholesteric liquid crystal layer (R2) in the 1/4 wavelength plate laminate produced as described above was bonded thereto. UV irradiation was performed thereon in accordance with the same procedures as in the above description and the glass plate was peeled off after curing of the adhesive to obtain a laminate of the 1/4 wavelength plate Y, the cholesteric liquid crystal layer (R2), and the cholesteric liquid crystal layer (D2).

The above-described adhesive was coated on the cholesteric liquid crystal layer (D2), and the cholesteric liquid crystal layer (R1) produced as described above was bonded thereto. UV irradiation was performed thereon in accordance with the same procedures as in the above description and the temporary support was peeled off after curing of the adhesive to produce a circular polarization reflection layer (cholesteric liquid crystal layer (R2), cholesteric liquid crystal layer (D2), cholesteric liquid crystal layer (R1)) in which three cholesteric liquid crystal layers were laminated on the 1/4 wavelength plate.

Next, the circular polarization reflection layer and a front surface plate were bonded in the same manner as in Example 1, and thus a half mirror of Example 3 was produced.

<Manufacturing of Half Mirror of Example 4>

A PET film (no undercoat layer, thickness: 75 μm) manufactured by Fujifilm Corporation was prepared as a temporary support and a surface of the temporary support was rubbed. Next, the mixture (R2) was coated on the rubbed surface of the temporary support at room temperature using a wire bar to obtain a coating film such that the thickness of the film after drying was 2.9 μm. After the solvent was removed by drying the obtained coating film for 30 seconds at room temperature, the film was heated for 2 minutes in an atmosphere at 100°C. Then, the coating film was held at 60°C and ultraviolet irradiation was performed on the coating film using a high-pressure mercury lamp under a nitrogen atmosphere to form a cholesteric liquid crystal layer (R2).

As an alignment layer, a solution in which the concentration of SUNEVER SE-130 (manufactured by NISSAN CHEMICAL INDUSTRIES. LTD.) dissolved in N-methylpyrrolidone was adjusted such that the thickness of a dried film was 0.5 μm was coated on a glass plate by bar coating to form a coating film, and then heated for 5 minutes at 100°C and heated for 1 hour at 250°C. A surface of the coating film was rubbed to form the alignment layer. Next, the mixture (D1) was coated on the alignment layer by bar coating such that the thickness of a dried film was 2.1 μm. After the solvent was removed by holding the coating film for 2 minutes at 80°C, heat-aging was performed for 4 minutes at 100°C to obtain a coating film having a uniform alignment state. Then, the coating film was held at 60°C and ultraviolet irradiation was performed on the coating film using a high-pressure mercury lamp under a nitrogen atmosphere to form a cholesteric liquid crystal layer (D1).

A cholesteric liquid crystal layer (D2) was formed on a glass plate prepared separately in the same manner as in the above description, except that the mixture (D2) was used in place of the mixture (D1) and the thickness of a dried film was 3.0 μm.

A UV-curable adhesive Exp. U12034-6 manufactured by DIC Corporation was coated using a wire bar at room temperature on the liquid crystal surface side of the transfer-type 1/4 wavelength plate X produced as described above such that the thickness of the film after drying was 5 μm. The surface on which the adhesive had been coated and a surface of the cholesteric liquid crystal layer (D1) produced as described above were bonded such that air bubbles did not enter therebetween, and then UV irradiation was performed for 6 to 12 seconds with an output of 60% using D-BULB (lamp, 90 $mW/cm^2$) manufactured by Fusion UV Systems at 50°C. In this case, the 1/4 wavelength plate X was cut in a shape larger than the glass substrate by 3 cm and bonded. Thereafter, the surface of the cholesteric liquid crystal layer (D1) on the temporary support was grasped and the glass substrate was carefully peeled off, whereby a laminate of the 1/4 wavelength plate X and the cholesteric liquid crystal layer (D1) with the temporary support was obtained.

A UV-curable adhesive Exp. U12034-6 manufactured by DIC Corporation was coated using a wire bar at room temperature on the liquid crystal surface side of the cholesteric liquid crystal layer (R2) produced as described above such that the thickness of the film after drying was 5 μm. The surface on which the adhesive had been coated and a surface of the cholesteric liquid crystal layer (D2) on the glass plate produced as described above were bonded such that air bubbles did not enter therebetween, and then UV irradiation was performed for 6 to 12 seconds with an output of 60% using D-BULB (lamp, 90 $mW/cm^2$) manufactured by Fusion UV Systems at 50°C. In this case, the cholesteric liquid crystal layer (R2) was cut in a shape larger than the glass plate by 3 cm and bonded. Thereafter, the surface of the cholesteric liquid crystal layer (R2) on the temporary support was grasped and the glass substrate was carefully peeled off, whereby a laminate of the cholesteric liquid crystal layer (R2) and the cholesteric liquid crystal layer (D2) with the temporary support was obtained.

Next, on a front surface plate (FLOAT GLASS FL2, manufactured by Central Glass Co., Ltd., thickness: 2 mm, haze: 0.1), a UV-curable adhesive Exp. U12034-6 manufactured by DIC Corporation was coated using a wire bar at room temperature such that the thickness of the film after drying was 5 μm. The surface on which the adhesive had been coated and a surface of the cholesteric liquid crystal layer (D2) of the laminate of the cholesteric liquid crystal layer (R2) and the cholesteric liquid crystal layer (D2) with the temporary support produced as described above were bonded such that air bubbles did not enter therebetween, and then UV irradiation was performed for 6 to 12 seconds with an output of 60% using D-BULB (lamp, 90 $mW/cm^2$) manufactured by Fusion UV Systems at 50°C. Thereafter, the temporary support was peeled off and a front surface plate-including laminate was obtained.

The above-described adhesive was coated on the cholesteric liquid crystal layer (R2) of the front surface plate-including laminate in the same manner, and the surface on which the adhesive had been coated and a surface of the cholesteric liquid crystal layer (D1) of the laminate of the 1/4 wavelength plate X and the cholesteric liquid crystal layer (D1) with the temporary support produced as described above were bonded such that air bubbles did not enter therebetween. UV irradiation was performed in the same manner, and then the temporary support was peeled off to produce a half mirror of Example 4.

<Manufacturing of Half Mirror of Comparative Example 1>

A PET film (no undercoat layer, thickness: 75 μm) manufactured by Fujifilm Corporation was prepared as a temporary support and a surface of the temporary support was rubbed. The mixture (R1) was coated on the temporary support at room temperature using a wire bar of which the bar number was adjusted such that the thickness of a dried film was 2.3 μm, thereby forming a coating film. After the solvent was removed by drying for 30 seconds at room temperature, the film was heated for 2 minutes in an atmosphere at 100°C. Then, the coating film was held at 60°C and ultraviolet irradiation was performed on the coating film using a high-pressure mercury lamp under a nitrogen atmosphere to form a cholesteric liquid crystal layer (R1).

Next, on the cholesteric liquid crystal layer (R1), the mixture (R2) was coated at room temperature using a wire bar to form a coating film such that the thickness of the film after drying was 2.9 μm. After the solvent was removed by drying the obtained coating film for 30 seconds at room temperature, the film was heated for 2 minutes in an atmosphere at 100°C. Then, the coating film was held at 60°C and ultraviolet irradiation was performed on the coating film using a high-pressure mercury lamp under a nitrogen atmosphere to form a cholesteric liquid crystal layer (R2).

On the cholesteric liquid crystal layer (R2), the mixture (R3) was coated at room temperature using a wire bar to form a coating film such that the thickness of the film after drying was 3.3 μm. After the solvent was removed by drying the obtained coating film for 30 seconds at room temperature, the film was heated for 2 minutes in an atmosphere at 100°C. Then, the coating film was held at 60°C and ultraviolet irradiation was performed on the coating film using a high-pressure mercury lamp under a nitrogen atmosphere to form a cholesteric liquid crystal layer (R3). Thus, a circular polarization reflection layer in which three rod-like cholesteric liquid crystal layers were laminated was produced.

A UV-curable adhesive Exp. U12034-6 manufactured by DIC Corporation was coated using a wire bar at room temperature on a surface of the cholesteric liquid crystal layer of the circular polarization reflection layer produced as described above such that the thickness of the film after drying was 5 μm. The surface on which the adhesive had been coated and a front surface plate (FLOAT GLASS FL2, manufactured by Central Glass Co., Ltd., thickness: 2 mm) were bonded such that air bubbles did not enter therebetween, and then UV irradiation was performed for 6 to 12 seconds with an output of 60% using D-BULB (lamp, 90 $mW/cm^2$) manufactured by Fusion UV Systems at 50°C. Then, the temporary support was peeled off and a half mirror of Comparative Example 1 was produced.

<Evaluation of Mirror with Image Display Function>

A liquid crystal panel 23EA53VA manufactured by LG Electronics. having white brightness of 200 $cdm^{-2}$ and chromaticity of x=0.32, y=0.32 was horizontally installed, and each produced half mirror was disposed opposed to an image display surface such that the front surface plate was on the opposite side (positioned farthest from the image display side), thereby producing a mirror with an image display function.

In this case, the slow axis of the 1/4 wavelength plate was inclined with respect to the emission polarization axis of the liquid crystal panel (polarization direction of display light of the liquid crystal panel) at 45 degrees. The half mirror configurations of Examples 1 to 4 and Comparative Example 1 were evaluated as follows. The results are shown in Table 3.

(Brightness of Display Image)

A white solid image was displayed on the above-described liquid crystal panel and front luminance was measured by using a luminance meter BM-5A manufactured by TOPCON CORPORATION to obtain "(front luminance after installation of half mirror/front luminance before installation of half mirror)× 100%". In this case, in order to eliminate polarization dependency, the measurement was performed by rotating the luminance meter by 0 degree and 90 degrees by setting the measurement light as a rotation axis, and the resultant values were averaged.

(Possibility of Visual Recognition of Mirror-Reflected Image When Polarizing Sunglasses are Used (visibility when polarizing sunglasses are used))

The image display device was turned off and possibility of visual recognition of an image reflected by the mirror was visually evaluated through the polarizing sunglasses. In a case where it was possible to visually recognize the image, the result was represented by "Yes", and in a case where it was impossible to visually recognize the image, the result was represented by "No".

(View Angle Characteristics of Tint of Display Image)

A white solid image was displayed on the above-described liquid crystal panel, and chromaticity was measured

by using a luminance meter BM-5A manufactured by TOPCON CORPORATION with an inclination by 45 degrees in a long side direction of the panel and in a short side direction of the panel from the front surface of the panel, and evaluated based on the following standards. Measured values (measured chromaticity: x=x1, y=y1) to be described later are obtained by arithmetically averaging two values respectively measured by inclination by 45 degrees in the long side direction of the panel and in the short side direction of the panel.

In addition, in order to eliminate polarization dependency, the measurement was performed by rotating the luminance meter by 0 degree and 90 degrees by setting the measurement light as a rotation axis, and the resultant values were averaged.

In a case where the measured chromaticity was denoted by x=x1, y=y1 and the absolute value of a variation width relative to the chromaticity of the liquid crystal panel of x=0.32, y=0.32 (corresponding to chromaticity when visually recognized in a frontal direction) was denoted by $\Delta x = |x1-0.32|$, $\Delta y = |y1-0.32|$,

A: $\Delta x$ is less than 0.02 and $\Delta y$ is less than 0.02

B: A larger one of $\Delta x$ and $\Delta y$ is 0.02 or greater and less than 0.05

C: A larger one of $\Delta x$ and $\Delta y$ is 0.05 or greater

In Table 1, "central wavelength of selective reflection" means a central wavelength of a selective reflection band of each cholesteric liquid crystal layer.

[Table 3]

| | | | Example 1 | Example 2 | Example 3 | Example 4 | Comparative Example 1 |
|---|---|---|---|---|---|---|---|
| Configuration of Half Mirror | Support | | TD80 | TD80 | TD80 | None | None |
| | 1/4 Wavelength Plate | Type of Liquid Crystal Compound | Disk-Like Liquid Crystal | Disk-Like Liquid Crystal | Disk-Like Liquid Crystal | Rod-Like Liquid Crystal | None |
| | | Phase Difference (λ=550 nm) | 130 nm | 128 nm | 124 nm | 130 nm | - |
| | | Thickness | 1.0 μm | 1.0 μm | 1.0 μm | 0.7 μm | - |
| | First Cholesteric Liquid Crystal Layer | Type of Liquid Crystal Compound | Disk-Like Liquid Crystal | Disk-Like Liquid Crystal | Rod-Like Liquid Crystal | Disk-Like Liquid Crystal | Rod-Like Liquid Crystal |
| | | Central Wavelength of Selective Reflection | 650 nm | 450 nm | 540 nm | 450 nm | 450 nm |
| | | Thickness | 2.4 μm | 2.1 μm | 2.9 μm | 2.1 μm | 2.3 μm |
| | Second Cholesteric Liquid Crystal Layer | Type of Liquid Crystal Compound | Rod-Like Liquid Crystal | Rod-Like Liquid Crystal | Disk-Like Liquid Crystal | Rod-Like Liquid Crystal | Rod-Like Liquid Crystal |
| | | Central Wavelength of Selective Reflection | 450 nm | 650 nm | 650 nm | 540 nm | 540 nm |
| | | Thickness | 1.7 μm | 2.5 μm | 3.0 μm | 2.9 μm | 2.9 μm |
| | Third Cholesteric Liquid Crystal Layer | Type of Liquid Crystal Compound | Rod-Like Liquid Crystal | Rod-Like Liquid Crystal | Rod-Like Liquid Crystal | Disk-Like Liquid Crystal | Rod-Like Liquid Crystal |
| | | Central Wavelength of Selective Reflection | 540 nm | 540 nm | 450 nm | 650 nm | 650 nm |
| | | Thickness | 2.8 μm | 2.8 μm | 2.3 μm | 3.0 μm | 3.3 μm |
| Evaluation Results | Brightness of Display Image | | 90% | 89% | 90% | 90% | 42% |
| | Visibility When Polarizing Sunglasses are Used | | Yes | Yes | Yes | Yes | Yes |
| | View Angle Characteristics of Tint of Display Image | | A | A | A | A | C |

As shown in Table 3, the mirror with an image display function according to the invention was confirmed to be capable of displaying a brighter image and to have excellent view angle characteristics.

However, in Comparative Example 1 in which the 1/4 wavelength plate was not included and the layer formed of a liquid crystal composition containing a disk-like liquid crystal compound was not included, it was impossible to obtain desired effects.

Explanation of References

10, 100: mirror with image display function
12: image display device
14: 1/4 wavelength plate
16: circular polarization reflection layer
18: first cholesteric liquid crystal layer
20: second cholesteric liquid crystal layer
22: third cholesteric liquid crystal layer
24: front surface plate

## Claims

1. A mirror (10) with an image display function comprising:

   an image display device (12) which emits linearly polarized light to form an image;
   a 1/4 wavelength plate (14); and
   a circular polarization reflection layer (16),
   wherein the image display device (12), the 1/4 wavelength plate (14), and the circular polarization reflection layer (16) are provided in this order,
   wherein the circular polarization reflection layer (16) includes two or more cholesteric liquid crystal layers including a cholesteric liquid crystal layer of which a central wavelength of a selective reflection band is positioned in a visible light region, wherein the two or more cholesteric liquid crystal layers are different from each other in central wavelength of a selective reflection band, and wherein the cholesteric liquid crystal layer having a longer central wavelength of a selective reflection band is disposed closer to the image display device (12), and
   wherein at least one of the 1/4 wavelength plate (14) or the circular polarization reflection layer (16) includes a layer formed of a liquid crystal composition containing a disk-like liquid crystal compound.

2. The mirror (10) with an image display function according to claim 1,
   wherein at least one of the 1/4 wavelength plate (14) or the circular polarization reflection layer (16) includes a layer formed of a liquid crystal composition containing a rod-like liquid crystal compound.

3. The mirror (10) with an image display function according to claim 1,
   wherein the two or more cholesteric liquid crystal layers are in direct contact with each other.

4. The mirror (10) with an image display function according to any one of claims 1 to 2,
   wherein the circular polarization reflection layer (16) includes three or more cholesteric liquid crystal layers, and the three or more cholesteric liquid crystal layers are different from each other in central wavelength of a selective reflection band.

5. The mirror (10) with an image display function according to claim 4,
   wherein the circular polarization reflection layer (16) includes a cholesteric liquid crystal layer (18) of which a central wavelength of a selective reflection band is in a wavelength region of red light, a cholesteric liquid crystal layer (22) of which a central wavelength of a selective reflection band is in a wavelength region of green light, and a cholesteric liquid crystal layer (20) of which a central wavelength of a selective reflection band is in a wavelength region of blue light.

6. The mirror (10) with an image display function according to any one of claims 1 to 5,
   wherein the 1/4 wavelength plate (14) is a layer formed by curing a liquid crystal composition containing a polymerizable liquid crystal compound.

7. The mirror (10) with an image display function according to any one of claims 1 to 6,
   wherein the 1/4 wavelength plate (14) and the circular polarization reflection layer (16) are in direct contact with each other.

8. The mirror (10) with an image display function according to any one of claims 1 to 7,
   wherein the image display device (12) and the 1/4 wavelength plate (14) are adhered via an adhesive layer.

## Patentansprüche

1. Spiegel (10) mit einer Bildanzeigefunktion, umfassend:

   eine Bildanzeigevorrichtung (12), die zum Bilden eines Bilds linear polarisiertes Licht emittiert;
   eine 1/4-Wellenlängenplatte (14) und
   eine Reflexionsschicht einer zirkularen Polarisation (16),
   wobei die Bildanzeigevorrichtung (12), die 1/4-Wellenlängenplatte (14) und die Reflexionsschicht einer zirkularen Polarisation (16) in dieser Reihenfolge bereitgestellt sind,
   wobei die Reflexionsschicht einer zirkularen Polarisation (16) zwei oder mehrere Schichten eines cholesterischen Flüssigkristalls, einschließlich einer Schicht eines cholesterischen Flüssigkristalls, von der eine zentrale Wellenlänge eines Bands einer selektiven Reflexion in einem Bereich sichtbaren Lichts angeordnet ist, einschließt, wobei die zwei oder mehreren Schichten eines cholesterischen Flüssigkristalls in einer zentralen Wellenlänge eines Bands einer selektiven Reflexion voneinander verschieden sind und wobei die Schicht eines cholesterischen Flüssigkristalls, die eine längere zentrale Wellenlänge eines Bands einer selektiven Reflexion aufweist, näher an der Bildanzeigevorrichtung (12) angeordnet ist, und
   wobei zumindest eines von der 1/4-Wellenlängenplatte (14) oder der Reflexionsschicht einer zirkularen Polarisation (16) eine Schicht einschließt, die aus einer Flüssigkristall-Zusammensetzung gebildet ist, die eine scheibenartige Flüssigkristallverbindung enthält.

2. Spiegel (10) mit einer Bildanzeigefunktion nach Anspruch 1,
   wobei zumindest eines von der 1/4-Wellenlängenplatte (14) oder der Reflexionsschicht einer zirkularen Polarisation (16) eine Schicht einschließt, die aus einer Flüssigkristall-Zusammensetzung gebildet ist, die eine stabartige Flüssigkristallverbindung enthält.

3. Spiegel (10) mit einer Bildanzeigefunktion nach Anspruch 1,
   wobei die zwei oder mehreren Schichten eines cholesterischen Flüssigkristalls in direktem Kontakt miteinander sind.

4. Spiegel (10) mit einer Bildanzeigefunktion nach einem der Ansprüche 1 bis 2,
   wobei die Reflexionsschicht einer zirkularen Polarisation (16) drei oder mehrere Schichten eines cholesterischen Flüssigkristalls einschließt und die drei oder mehreren Schichten eines cholesterischen Flüssigkristalls in einer zentralen Wellenlänge eines Bands einer selektiven Reflexion voneinander verschieden sind.

5. Spiegel (10) mit einer Bildanzeigefunktion nach Anspruch 4,
   wobei die Reflexionsschicht einer zirkularen Polarisation (16) eine Schicht eines cholesterischen Flüssigkristalls (18), von der eine zentrale Wellenlänge eines Bands einer selektiven Reflexion in einem Wellenlängenbereich von rotem Licht ist, eine Schicht eines cholesterischen Flüssigkristalls (22), von der eine zentrale Wellenlänge eines Bands einer selektiven Reflexion in einem Wellenlängenbereich von grünem Licht ist, und eine Schicht eines cholesterischen Flüssigkristalls (20), von der eine zentrale Wellenlänge eines Bands einer selektiven Reflexion in einem Wellenlängenbereich von blauem Licht ist, einschließt.

6. Spiegel (10) mit einer Bildanzeigefunktion nach einem der Ansprüche 1 bis 5,
   wobei die 1/4-Wellenlängenplatte (14) eine Schicht ist, die durch Härten einer Flüssigkristall-Zusammensetzung, die eine polymerisierbare Flüssigkristallverbindung enthält, gebildet wird.

7. Spiegel (10) mit einer Bildanzeigefunktion nach einem der Ansprüche 1 bis 6,
   wobei die 1/4-Wellenlängenplatte (14) und die Reflexionsschicht einer zirkularen Polarisation (16) in direktem Kontakt miteinander sind.

8. Spiegel (10) mit einer Bildanzeigefunktion nach einem der Ansprüche 1 bis 7,
   wobei die Bildanzeigevorrichtung (12) und die 1/4-Wellenlängenplatte (14) über eine Adhäsionsschicht verklebt sind.

## Revendications

1. Miroir (10) avec une fonction d'affichage d'image comprenant :

   un dispositif d'affichage d'image (12) qui émet une lumière linéairement polarisée pour former une image ;

une lame quart d'onde (14) ; et
une couche de réflexion à polarisation circulaire (16),
dans lequel le dispositif d'affichage d'image (12), la lame quart d'onde (14), et la couche de réflexion à polarisation circulaire (16) sont fournis dans cet ordre,
dans lequel la couche de réflexion à polarisation circulaire (16) inclut au moins deux couches de cristaux liquides cholestériques incluant une couche de cristaux liquides cholestériques dont une longueur d'onde centrale d'une bande de réflexion sélective est positionnée dans une région de lumière visible, dans lequel les au moins deux couches de cristaux liquides cholestériques sont différentes l'une de l'autre dans une longueur d'onde centrale d'une bande de réflexion sélective, et dans lequel la couche de cristaux liquides cholestériques présentant une plus longue longueur d'onde centrale d'une bande de réflexion sélective est disposée plus proche du dispositif d'affichage d'image (12), et
dans lequel au moins l'une parmi la lame quart d'onde (14) ou la couche de réflexion à polarisation circulaire (16) inclut une couche formée d'une composition de cristaux liquides contenant un composé de cristaux liquides discoïdes.

2. Miroir (10) avec une fonction d'affichage d'image selon la revendication 1,
dans lequel au moins l'une parmi la lame quart d'onde (14) ou la couche de réflexion à polarisation circulaire (16) inclut une couche formée d'une composition de cristaux liquides contenant un composé de cristaux liquides en forme de tige.

3. Miroir (10) avec une fonction d'affichage d'image selon la revendication 1,
dans lequel les au moins deux couches de cristaux liquides cholestériques sont en contact direct l'une avec l'autre.

4. Miroir (10) avec une fonction d'affichage d'image selon l'une quelconque des revendications 1 à 2,
dans lequel la couche de réflexion à polarisation circulaire (16) inclut au moins trois couches de cristaux liquides cholestériques, et les au moins trois couches de cristaux liquides cholestériques sont différentes les unes des autres dans une longueur d'onde centrale d'une bande de réflexion sélective.

5. Miroir (10) avec une fonction d'affichage d'image selon la revendication 4,
dans lequel la couche de réflexion à polarisation circulaire (16) inclut une couche de cristaux liquides cholestériques (18) dont une longueur d'onde centrale d'une bande de réflexion sélective se trouve dans une région de longueur d'onde de la lumière rouge, une couche de cristaux liquides cholestériques (22) dont une longueur d'onde centrale d'une bande de réflexion sélective se trouve dans une région de longueur d'onde de la lumière verte, et une couche de cristaux liquides cholestériques (20) dont une longueur d'onde centrale d'une bande de réflexion sélective se trouve dans une région de longueur d'onde de la lumière bleue.

6. Miroir (10) avec une fonction d'affichage d'image selon l'une quelconque des revendications 1 à 5,
dans lequel la lame quart d'onde (14) est une couche formée par durcissement d'une composition de cristaux liquides contenant un composé de cristaux liquides polymérisable.

7. Miroir (10) avec une fonction d'affichage d'image selon l'une quelconque des revendications 1 à 6,
dans lequel la lame quart d'onde (14) et la couche de réflexion à polarisation circulaire (16) sont en contact direct l'une avec l'autre.

8. Miroir (10) avec une fonction d'affichage d'image selon l'une quelconque des revendications 1 à 7,
dans lequel le dispositif d'affichage d'image (12) et la lame quart d'onde (14) sont collés par l'intermédiaire d'une couche adhésive.

FIG. 1

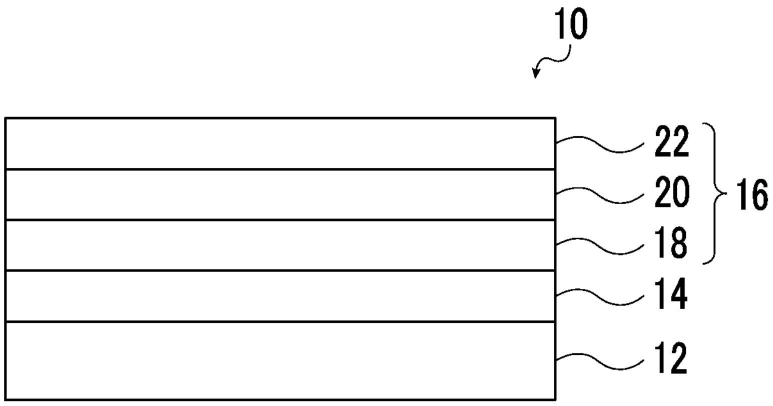


FIG. 2

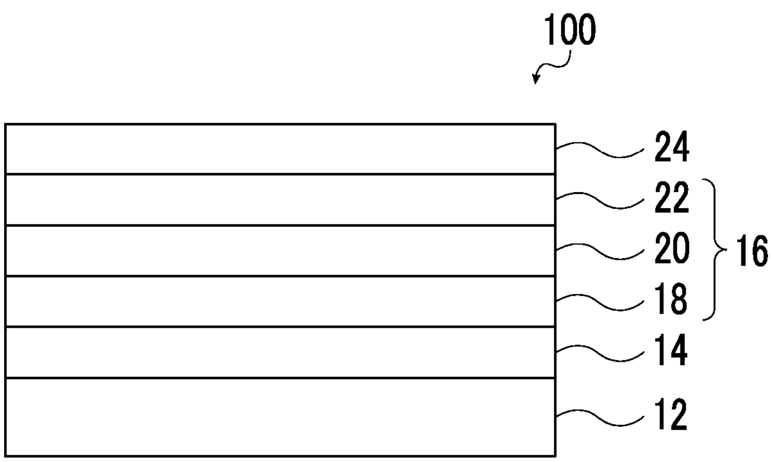

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014112325 A
- US 6661482 B
- WO 2015029958 A
- US 2008252833 A
- WO 2011068852 A
- JP 5027118 A
- JP H0527118 A
- JP 5027119 A
- JP H0527119 A
- JP 10068816 A
- JP H1068816 A
- JP 10090521 A
- JP H1090521 B
- WO 0026705 A
- WO 0065384 A
- JP 1999513019 A
- JP H11513019 A
- JP 2005289980 A
- JP 2007108732 A
- JP 2010244038 A
- US 4683327 A
- US 5622648 A
- US 5770107 A
- WO 9522586 A
- WO 9524455 A
- WO 9700600 A
- WO 9823580 A
- WO 9852905 A
- JP 1272551 A
- JP H01272551 A
- JP 6016616 A
- JP H0616616 A
- JP 7110469 A
- JP H07110469 A
- JP 11080081 A
- JP H1180081 A
- JP 2001328973 A
- US 2367661 A
- US 2367670 A
- US 2448828 A
- US 2722512 A
- US 3046127 A
- US 2951758 A
- US 3549367 A
- JP 60105667 A
- JP S60105667 A
- US 4239850 A
- US 4212970 A
- JP 2007272185 A
- JP 2012203237 A


### Non-patent literature cited in the description


- Introduction to Liquid Crystal Chemical Test. Sigma Publications, 2007, 46
- Liquid Crystal Handbook. 196
- **MASAO DOI ; IWANAMI SHOTEN.** *Polymer Physics and Phase Transition Dynamics,* 1992, 2
- *Makromol. Chem.,* 1989, vol. 190, 2255
- *Advanced Materials,* 1993, vol. 5, 107
- Liquid Crystal Device Handbook. Committee of Japan Society for the Promotion of Science, 1989, 199